(19) Europäisches Patentamt
European Patent Office
Office européen des brevets

(11) **EP 2 505 978 B1**

(12) **EUROPEAN PATENT SPECIFICATION**

(45) Date of publication and mention
of the grant of the patent:
**10.05.2017 Bulletin 2017/19**

(51) Int Cl.:
***G01K 7/01*** (2006.01)

(21) Application number: **11160081.3**

(22) Date of filing: **28.03.2011**

(54) **Temperature sensor, electronic device and temperature measurement method**

Temperatursensor, elektronische Vorrichtung und Temperaturmessverfahren

Capteur de température, dispositif électronique et procédé de mesure de la température

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.10.2012 Bulletin 2012/40**

(73) Proprietor: **NXP B.V.**
**5656 AG Eindhoven (NL)**

(72) Inventors:
• **Ponomarev, Youri Victorovitch**
**Redhill, Surrey RH1 1DL (GB)**
• **Nackaerts, Axel**
**Redhill, Surrey RH1 1DL (GB)**

(74) Representative: **Hardingham, Christopher Mark**
**NXP SEMICONDUCTORS**
**Intellectual Property Group**
**Abbey House**
**25 Clarendon Road**
**Redhill, Surrey RH1 1QZ (GB)**

(56) References cited:
**US-B2- 7 260 007**

• **M. TERAUCHI: JAPANESE JOURNAL OF APPLIED PHYSICS, vol. 46, no. 7A, 2007, pages 4102-4104, XP055007712,**
• **CRISTOLOVEANU S ET AL: "Recent advances in SOI materials and device technologies for high temperature", HIGH-TEMPERATURE ELECTRONIC MATERIALS, DEVICES AND SENSORS CONFERENCE, 1998 SAN DIEGO, CA, USA 22-27 FEB. 1998, NEW YORK, NY, USA,IEEE, US, 22 February 1998 (1998-02-22), pages 86-93, XP010313523, DOI: 10.1109/HTEMDS.1998.730656 ISBN: 978-0-7803-4437-2**
• **LEE J-K ET AL: "Temperature dependence of DTMOS transistor characteristics", SOLID STATE ELECTRONICS, ELSEVIER SCIENCE PUBLISHERS, BARKING, GB, vol. 48, no. 1, 1 January 2004 (2004-01-01), pages 183-187, XP004468398, ISSN: 0038-1101, DOI: 10.1016/S0038-1101(03)00297-1**

**Description**

FIELD OF THE INVENTION

The present invention relates to a temperature sensor comprising a p-n junction device.

The present invention further relates to an electronic device comprising such a temperature sensor.

The present invention yet further relates to a method of measuring a temperature using such a temperature sensor.

BACKGROUND OF THE INVENTION

Integrated temperature sensors are required in number of applications, e.g., on-chip monitoring to prevent thermal run-away of circuits, control of the operating temperature on non-volatile memories in smart cards, and so on. Another important use of integrated temperature sensors is the monitoring of the chip environment. An example of such is monitoring and shelf-life determination of perishable products as the remaining shelf life of most perishable products is determined by time-temperature integration values, in the first order of approximation.

Typically, for monitoring purposes, a near field communication (NFC) device such as an RFID tag can be used to identify the product and provide wireless communication path to the user, which may be combined with a temperature sensor logger that has better than 1°C accuracy. For reasons of cost efficiency both components should preferably be monolithically integrated. Consequently, the temperature sensor often has to be realized in advanced semiconductor technologies such as a sub-micron CMOS technology.

Monolithically integrated temperature sensors are well-known, and are commonly based on utilization of temperature dependence of the difference in base-emitter voltages $AV_{BE}$ of two matched substrate PNP transistors, biased at different current densities, to measure temperature. This difference is the voltage proportional to absolute temperature (PTAT) and thus can be used for the temperature measurements.

However, a problem with such integrated temperature sensors is that they can be relatively inaccurate. For instance, for a temperature sensor realized in a 140 nm CMOS process, the determined temperature can contain an uncertainty of +/- 5°C, which is unacceptably large in most application domains. This can be improved to less than 1°C value by multi-point calibration and after-processing trimming of the temperature sensor.

Typically, to achieve the best possible precision, advanced circuit design techniques are used such as opamp (operational amplifier) offset cancellation by chopping, dynamic element matching (for current sources), and curvature correction techniques. Additionally, a calibration at room temperature after packaging is also required to filter out the detrimental effects of introduced substrate stress. An overview of such advanced circuit design techniques and approaches can be found in "Temperature Sensors and Voltage References Implemented in CMOS Technology" by G.C.M. Meijer et al. in IEEE Sensors Journal, Vol. 1 (3), 2001, pages 225-234. This article shows that even in advanced CMOS technologies an accurate T sensor can be fabricated. However, the additional calibration steps make such devices prohibitively expensive for the low-cost applications mentioned above. Also, owing to significant amount of peripheral electronics needed for such temperature sensors, area (>1mm$^2$ in a 140 nm CMOS device), speed and total power consumption are well above acceptable levels.

The article by Meijer et al. relies on the use of a pair of p-n junction-based transducers in the form of MOS transistors for the PTAT generation. Alternative embodiments of such p-n junction-based transducers can for instance be found in US 5,873,053, US 6,489,831, US 7,127,368, US 7,197,420 and references therein. Each of these embodiments require some form of calibration to compensate for the mismatch of the two devices that generate the PTAT signals, which adds to the cost of such devices.

"Recent Advances in SOI Materials and Device Technologies for High Temperature" by S. Cristoloveanu and G. Reichert in IEEE conference proceedings of High-Temperature Electronic Materials, Devices and Sensors Conference, February 22 - 27, 1998, pages 86-93, as well as "Temperature dependence of DTMOS transistor characteristics" by J.-K. Lee et al. in Solid State Electronics 48 (2004), pages 183-187, disclose p-n junction devices having temperature dependent characteristics, whereby the subthreshold swing is dependent on temperature.

US7260007B2 discloses a diode device used for determining the diode temperature, in which three voltages are measured at three different current levels along the voltage-current characteristics of the diode, wherein the resulting curve is compared to curves stored in a look-up table, each stored curve corresponding to a particular temperature.

SUMMARY OF THE INVENTION

The present invention seeks to provide a temperature sensor that can achieve the required accuracy in a more cost-effective manner.

The present invention further seeks to provide an electronic device comprising such a temperature sensor.

The present invention yet further seeks to provide a method of measuring a temperature using such a temperature sensor.

According to an aspect of the present invention, there is provided a temperature sensor according to claim 1 comprising a p-n junction device, a current device adapted to provide a sequence of different currents to the p-n junction device, said sequence covering a range of currents such that the voltage characteristics comprise a full sweep of the current-voltage behavior of the p-n junction device, said full sweep including the off-region, linear region and saturation region of the current-voltage behavior, a measurement circuit adapted to measure the voltage characteristics of the p-n junction device as a function of said sequence, and a processor adapted to determine the minimum value of the subthreshold swing from said characteristics and to convert said minimum value to a temperature value.

The present invention is based on the realization that an accurate temperature reading can be achieved using a temperature sensor comprising a single p-n junction device acting as a transducer such as a dynamic threshold MOS (DTMOS) transistor by configuring the temperature sensor such that a full sweep of the I-V characteristics of the p-n junction device is performed during the temperature measurement, with the minimum value of the subthreshold swing of the p-n junction device determined for each of the applied currents being representative of the absolute temperature value. The use of a single p-n junction device avoids the need to include additional circuitry for addressing mismatch issues arising from the use of multiple p-n junction devices (e.g. a pair of such devices) such that in conjunction with the measurement principle of the present invention an area-efficient temperature sensor is obtained that can measure temperature with high accuracy.

The current device, the p-n junction device, the measurement circuit and the processor preferably are monolithically integrated, i.e. all form part of the same integrated circuit die as this yields a cost-effective implementation of the temperature sensor of the present invention.

In an embodiment, the current device comprises a plurality of current sources, each of said current sources being conductively coupled to the p-n junction device via a respective switch, the temperature sensor further comprising a controller adapted to individually control said respective switches to provide said sequence. This implementation can be realized using little additional area, which translates into a straightforward and cost-effective implementation.

The temperature sensor may further comprise a memory device adapted to store a measured voltage value for each of the currents in said sequence.

The temperature sensor of the present invention may be advantageously integrated into an electronic device. In an embodiment, the electronic device is a device providing wireless connectivity, such as a near-field communication device, an RFID tag, a Zigbee device, and so on, adapted to communicate the measured temperature to an external device. Such an electronic device benefits from having an accurate temperature sensor that can be realized in a cost-effective manner, preferably monolithically with the electronic device.

In accordance with another aspect of the present invention, there is provided a method of measuring a temperature using a p-n junction device according to claim 9, the method comprising providing a sequence of different currents to the p-n junction device, said sequence covering a range of currents such that the voltage characteristics comprise a full sweep of the current-voltage behavior of the p-n junction device, said full sweep including the off-region, linear region and saturation region of the current-voltage behavior; measuring the voltage characteristics of the p-n junction device as a function of said sequence; determining the minimum value of the subthreshold swing from said characteristics; and converting said minimum value to a temperature value.

The measurement method of the present invention is based on the insight that it is not necessary to determine part of the I-V curve of the p-n junction device in which the device displays ideal diode behavior as long as it is ensured that this sequence of currents applied to the p-n junction device includes this region. In this case, the minimal value of the voltage swing determined from each pair of I-V measurement points has been found to correspond to the region of the I-V curve in which the p-n junction device displays ideal diode behavior, as any non-ideality in the behavior of the p-n junction device will cause an increase in the value of this voltage swing.

In an embodiment, said sequence comprises a sequence of increasing current values. This has the advantage of enabling a straightforward implementation of the method of the present invention.

Preferably, said sequence covers a range of currents such that the voltage characteristics comprise a full sweep of the current-voltage behavior of the p-n junction device. This ensures that the current window in which the p-n junction device exhibits the ideal diode behavior is included in the sweep.

BRIEF DESCRIPTION OF THE EMBODIMENTS

Embodiments of the invention are described in more detail and by way of non-limiting examples with reference to the accompanying drawings, wherein:

  FIG. 1 schematically depicts a DTMOS transistor;
  FIG. 2 depicts the temperature-dependent behavior of the DTMOS transistor of FIG. 1;

FIG. 3 depicts the absolute temperature calculated from a measured subthreshold swing of a DTMOS transistor;

FIG. 4 depicts I-V curves (a) and extracted subthreshold swing values (b) and (c) of a DTMOS transistor at different temperatures;

FIG. 5 schematically depicts a prior art temperature sensor;

FIG. 6 schematically depicts a temperature sensor according to an embodiment of the present invention;

FIG. 7 depicts the measured variation of the absolute temperature determined with the prior art temperature sensor of FIG. 5 and the temperature sensor of the present invention as depicted in FIG. 6;

FIG. 8 schematically depicts a temperature sensor according to another embodiment of the present invention;

FIG. 9 depicts a sketch of expected I-V behavior (top plot) and extracted temperature values (bottom plot) for a temperature sensor according to the present invention; and

FIG. 10 depicts the simulation results of the behavior of an uncalibrated temperature sensor based on a single DTMOS transistor in a CMOS 140 nm technology compared to the behavior of a calibrated temperature sensor.

## DETAILED DESCRIPTION OF THE DRAWINGS

It should be understood that the Figures are merely schematic and are not drawn to scale. It should also be understood that the same reference numerals are used throughout the Figures to indicate the same or similar parts.

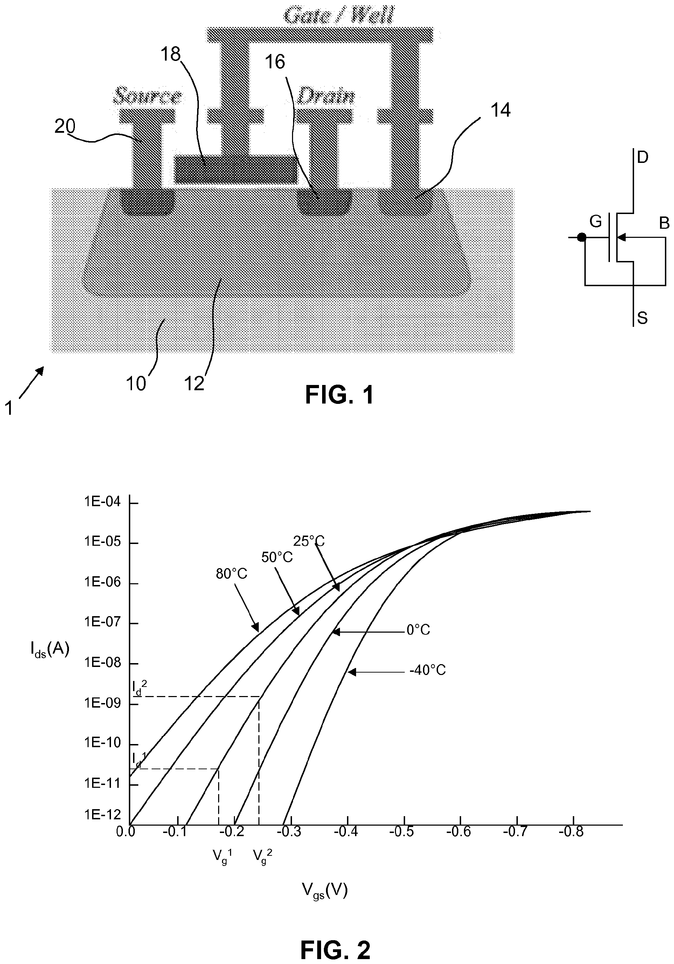

FIG. 1 shows a p-n junction device 1 that is suitable to be operated as a temperature sensor. The DTMOS device 1 is a MOS transistor which has a well 12 formed in a substrate 10, with a channel region formed in between source region 20 and drain region 16. The gate 18 over the channel region is interconnected with the well 12 via well contact 14. The basic device properties as well as its usefulness in logic and analog applications have been described in a number of research publications, such as A.J Annema in IEEE Journal of Solid State Circuits, July 1999 Vol. 34 (7), pages 949-955 and F. Assaderaghi et al. in IEEE Transactions on Electronic Devices, 1997, Vol. 44 (3), pages 414-422. The p-type DTMOS device 1 is routinely available for circuit design in modern CMOS processes.

It has been noted that the subthreshold behavior of a DTMOS transistor has temperature dependent characteristics that are close to an ideal diode. M. Terauchi in Japanese Journal of Applied Physics, Vol 46 (7A), 2007, pages 4102-4104 has suggested using a DTMOS transistor as temperature transducer. The temperature dependent behavior of the gate-source voltage $V_{gs}$ as function of the applied drain-source current $I_{ds}$ is displayed in FIG. 2. The absolute temperature AT can be derived from such a measurement by using the following formula of equation (1):

$$AT = \frac{q}{k_B \ln 10} \cdot \frac{\left| V_g{}^2 - V_g 1 \right|}{\log_{10} \left| \frac{I_d{}^2}{I_d{}^1} \right|} \qquad (1)$$

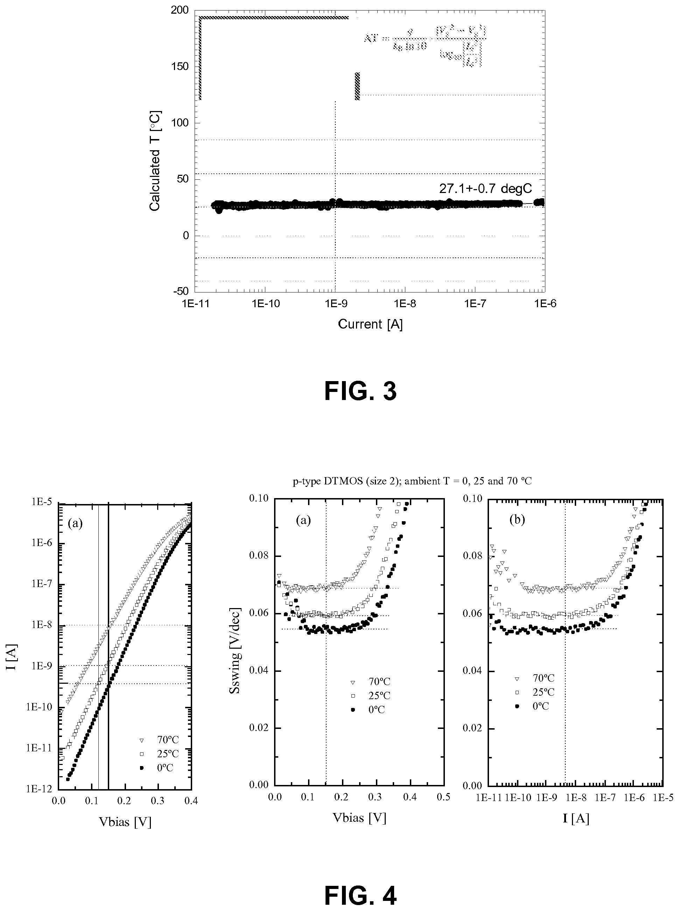

However, a problem with the results provided by Terauchi is that they exhibit rather significant errors, i.e. deviations from actual absolute temperature well in excess of 1°C. The reason behind this is the fact that ideal subthreshold DTMOS behavior is limited by leakage currents originating from both source/drain junctions and gate leakages at low bias and the onset of weak inversion at higher biases. As shown in FIG. 3, it is possible to optimize the device to increase the ideal region to ~6 orders of drain current. However, as previously explained, such optimizations can come at a cost penalty that can preclude such optimizations being economically feasible.

Another fundamental problem when using p-n junction transducers such as a DTMOS transistor as temperature sensors is that the location of the ideality region from which the temperature is to be derived is not fixed in the I-V space, but is in fact temperature dependent, as for instance can be seen in FIG. 2. This is more clearly shown in FIG. 4, in which the left hand pane shows the I-V curves of a DTMOS transistor 1 at three different temperatures, the middle pane shows the subthreshold swing of the DTMOS transistor 1 plotted against the bias voltage of the well region 12, and the right-hand pane shows the subthreshold swing of the DTMOS transistor 1 plotted against the drain-source current $I_{ds}$ applied to the transistor. In the present application, the term subthreshold swing defined as the voltage difference ($V_{gs}$) corresponding to a decade of current increase.

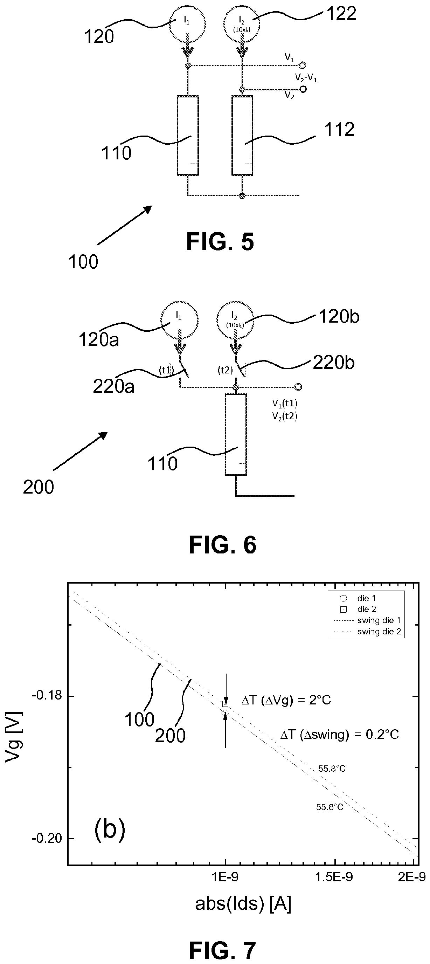

The temperature measurement has to be extracted from the linear part of the subthreshold swing, i.e. the part where the p-n junction device 1 shows (near-)ideal diode behavior. However, as is clearly demonstrated in the middle and right hand pane of FIG. 4, the location of the linearity region is temperature-dependent, which provides a challenge to the designer of such a temperature sensor in that the designer will somehow need to ensure that the current and bias voltage provided to the p-n junction device 1 are such that the temperature measurement at any given temperature takes place in the region of the I-V curve where the p-n junction device 1 exhibits the aforementioned (near-)ideal diode behavior. This is particularly relevant when the temperature sensor comprises a matched pair of p-n junction devices, as typically is the case in the prior art temperature sensors referred to in the background section of the description, an example embodiment of which is shown in FIG. 5.

The temperature sensor 100 comprises a first p-n junction device 110 and a second p-n junction device 112 matched to the first p-n junction device 110. A first current supply 120 is arranged to provide a first current to the first p-n junction device 110 and a second current supply 122 is arranged to provide a second current to the second p-n junction device 112. The subthreshold swing is typically measured by simultaneously biasing the two p-n junction devices at two different but constant current values, typically with a given ratio of 6-10, and measuring the respective voltages $V_1$ and $V_2$ across these devices, e.g. the base-emitter voltage for a bipolar transistor or the gate-source voltage for a MOSFET such as a DTMOS transistor, with the difference $V_2$-$V_1$ being indicative of the absolute temperature to which the temperature sensor 100 is exposed. This method is sometimes referred to in the prior art as the $\Delta V_{BE}$ method.

It will be apparent to the skilled person that in order to achieve an accurate temperature measurement, the p-n junction devices 110 and 112 should be perfectly matched. However, it is of course well-known that such perfect matching cannot be achieved in practice, as some level of mismatch is always present in integrated circuits (ICs), e.g. because of process variations, grain size effects and so on. The impact of mismatch may be compensated for, which typically requires the inclusion of additional circuitry to measure the average mismatch or improve the matching properties of the device manufacturing process to minimize mismatch. Such measures can significantly increase the manufacturing cost of the device, and cannot guarantee the required accuracy for a given IC, as mismatch is a statistical parameter, i.e. is not constant over a wafer lot or even over a single wafer.

The present invention is based on the realization that mismatch issues can be avoided altogether by basing a temperature sensor on single p-n junction device, and by sequentially providing the single p-n junction device with different biasing currents. An example implementation is shown in FIG. 6. The temperature sensor 200 comprises a single p-n junction device 110, preferably a DTMOS transistor or another suitable p-n junction-based transducer, which is conductively coupled to a first current source 120a through a first switch 220a and to a second current source 120b through a second switch 220b.

The temperature sensor 200 further comprises voltage measurement means (not shown) adapted to measure the voltage across the p-n junction device 110 at time $t_1$ when the switch 220a is closed, thereby connecting the first current source 120a to the p-n junction device 110, and to measure the voltage across the p-n junction device 110 at time $t_2$ when the switch 220b is closed, thereby connecting the second current source 120b to the p-n junction device 110. The second current source 120b typically provides a current that is approximately a decade larger than the current provided by the first current source 120a. The temperature sensor 200 further may comprise a memory (not shown) in which the measured voltage values are stored and a processor (not shown) for processing the measured voltage values and extracting the measured temperature from the voltage difference, e.g. by using the algorithm of equation (1). The processor may also be adapted to control the switches 220a and 220b, or alternatively the temperature sensor 200 may comprise a separate controller for this purpose.

In a preferred embodiment the various components of the temperature sensor 200 are monolithically integrated as a single chip. More preferably, the temperature sensor 200 forms part of an IC further providing wireless connectivity. To this end, the IC may further comprise a wireless transceiver, e.g. a Zigbee or Bluetooth transceiver, a RFID transceiver or other near-field communication (NFC) functionality, and so on. The IC may for instance take the form of an RFID tag. Such a tag may be used to monitor the temperature of a product to which the tag is attached, e.g. a food container, where the temperature reading provided by the tag can be used to accurately forecast the remaining shelf life of the food product. Other application domains where temperature sensing can be advantageously applied will be apparent to the skilled person.

FIG.7 shows a comparison of the performance of the matched prior art device 100 (transient $\Delta$Vg) and temperature sensor 200 of the present invention (transient $\Delta$swing). As can be derived fro FIG. 7, the temperature sensor 200 of the present invention achieves a ten-fold improvement in accuracy of the measured temperature compared to the temperature sensor 100 comprising the matched pair of p-n junction devices 110 and 112.

As already mentioned above, in order to be able to achieve such accuracy, it is imperative that the determination of the subthreshold swing takes place in the exponential region of the I-V curve of the p-n junction device 110, e.g. a DTMOS transistor, of the temperature sensor 200, i.e. ensure that the biasing currents fall into range of the DTMOS transistor operation where this transistor exhibits nears-ideal diode behavior. As previously explained, as the location of this linear region itself is temperature-dependent, another insight utilized in the present invention is that a full sweep of the I-V behavior of the p-n junction device 110 may be obtained, i.e. the p-n junction device 110 may be biased with sequence of different currents, e.g. a plurality of currents of increasing magnitude, such that all three regions, i.e. the off-region, the linear region and the saturation or breakdown region of the I-V curve are covered by this sweep.

An important insight, which can for instance be derived from the middle and right hand panes of FIG. 4, is that the subthreshold swing has its minimum value in the linear region of the I-V curve of the p-n junction device 110. Consequently, the voltage data obtained from the current sweep applied to the p-n junction device 110 may be evaluated by finding the minimum value of subthreshold swing, which subsequently can be converted to the absolute temperature value. This approach is valid for any temperature, since any non-idealities of the device 110 in the subthreshold region will result in increased swing value.

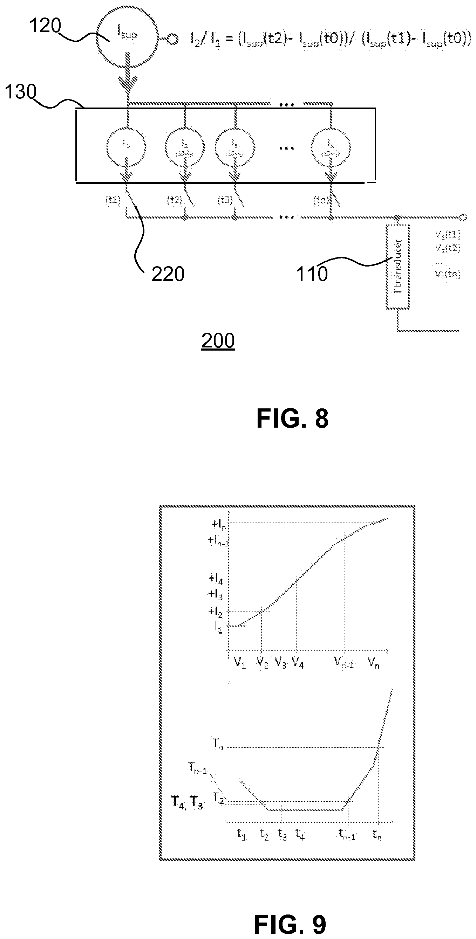

A straightforward circuit implementation of such a current sweep arrangement is shown in FIG. 8. The temperature sensor shown in FIG. 8 comprises a current source 120 which feeds a current mirror arrangement 130 designed to produce a plurality of different currents $I_1$-$I_N$. Each of the current mirrors can be individually connected to the p-n junction device 110 through one of the switches 220. In operation, a control circuit (not shown) will sequentially increase the current flowing through the DTMOS transducer 110 by opening the switches between the current mirrors and the transducer 110, whilst at the same time measuring the voltage across the transducer 110. For the measurements at each of times $t_2$-$t_n$, the subthreshold swing (and thus absolute temperature) is calculated and stored. Each measurement point is preferably based on the difference between two consecutive measurements, i.e. measurements taken at $t_n$ and $t_{n+1}$.

In an embodiment, at each consecutive measurement step all the previous switches are kept closed, i.e. in a conductive state, to sweep the current applied to the p-n junction device 110 from $I_1$ to $\sum_{1}^{n} I_m$. The current ratios $I_1/I_2/.../I_n$ are preferably set using common current mirroring techniques and can even be measured by monitoring the supply current as suggested in FIG. 8 for each $I_2/I_1$ ratio. The temperature sensor 200 may further comprise additional measures for improving the accuracy of the currents delivered to the p-n junction device 110. This can for instance be achieved by application of the advanced circuit techniques disclosed in the aforementioned paper by G.C.M. Meijer et al.

Alternative embodiments of the current sweep circuitry of the temperature sensor of the present invention will be immediately apparent to the skilled person. It is further noted that the p-n junction device 110 may be a DTMOS transistor, although alternative temperature transducers that have I-V characteristics comparable to a DTMOS transistor, e.g., diodes, bipolar transistors, resistors, and so on, are also feasible.

Following completion of the current sweep, i.e. at time $t_n$, the processor determines the minimum value of all stored temperature values, which is selected as the measurement representing the actual temperature. An example measurement result is shown in FIG. 9, from which it will be immediately apparent that the temperature values determined for time slots $t_3$ and $t_4$ are representative for the measured temperature as they correspond to the aforementioned minimum values.

It is noted for the sake of completeness that as the temperature sensor 200 of the present invention only has to process relative changes in currents and voltages, the absolute current and voltage values do not require determining as long as it is ensured that the current sweep from $I_1$ to $\sum_{1}^{n} I_m$ and associated voltages allow the determination of at least one correct absolute temperature, thus ensuring that no wafer processing, packaging or even ageing during use of the temperature sensor 200 will have an effect on the accuracy of such a sensor, as such degradation effects typically affect the absolute values only.

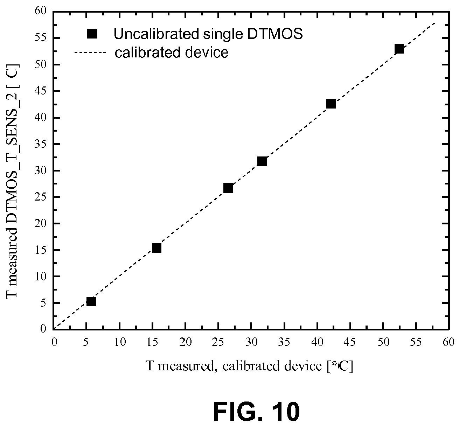

FIG. 10 depicts the simulation results of the temperature sensor 200 as shown in FIG. 8 using a DTMOS transistor as the p-n junction device 110 in a 140 nm CMOS technology. The simulation shows that for an uncalibrated sensor, an accuracy of better than 1°C in the range -40-85°C is obtained together with an extremely low power consumption ($\mu$W), small footprint (smaller than 0.1mm$^2$) and sub-ms operation speeds, thus demonstrating that the temperature sensor of the present invention can achieve the desired accuracy over a wide temperature range in a cost-effective manner.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware.

**Claims**

1. Temperature sensor (200) comprising:

   a p-n junction device (110);
   a current device (120, 130) adapted to provide a sequence of different currents to the p-n junction device, said sequence covering a range of currents such that the voltage characteristics comprise a full sweep of the current-voltage behavior of the p-n junction device (110), said full sweep including the off-region, linear region and saturation region of the current-voltage behavior;

a measurement circuit adapted to measure the voltage characteristics of the p-n junction device as a function of said sequence; and

a processor adapted to determine the minimum value of the subthreshold swing from said characteristics and to convert said minimum value to a temperature value.

2. The temperature sensor (200) of claim 1, wherein the current device (120, 130), the p-n junction device (110), the measurement circuit and the processor are monolithically integrated.

3. The temperature sensor (200) of claim 1 or 2, wherein the current device comprises a plurality of current sources (130), each of said current sources being conductively coupled to the p-n junction device (110) via a respective switch (220), the temperature sensor further comprising a controller adapted to individually control said respective switches to provide said sequence.

4. The temperature sensor (200) of any of claims 1-3, wherein the p-n junction device (110) is a transducer.

5. The temperature sensor (200) of claim 4, wherein the transducer is a DTMOS (dynamic threshold metal oxide semiconductor) transistor.

6. The temperature sensor (200) of any of claims 1-5, further comprising a memory device adapted to store a measured voltage value for each of the currents in said sequence.

7. An electronic device comprising the temperature sensor (200) of any of claims 1-6.

8. The electronic device of claim 7, wherein the electronic device provides wireless connectivity and is adapted to wirelessly communicate the measured temperature to an external device.

9. A method of measuring a temperature using a p-n junction device (110), the method comprising:

providing a sequence of different currents to the p-n junction device, said sequence covering a range of currents such that the voltage characteristics comprise a full sweep of the current-voltage behavior of the p-n junction device (110), said full sweep including the off-region, linear region and saturation region of the current-voltage behavior;

measuring the voltage characteristics of the p-n junction device as a function of said sequence;

determining the minimum value of the subthreshold swing from said characteristics; and

converting said minimum value to a temperature value.

10. The method of claim 9, wherein said sequence comprises a sequence of increasing current values.


**Patentansprüche**

1. Temperatursensor (200) aufweisend:

eine p-n Übergang Vorrichtung (110);

eine Stromvorrichtung (120, 130), geeignet zum Bereitstellen einer Sequenz von unterschiedlichen Strömen an die p-n Übergang Vorrichtung, wobei die Sequenz abdeckt einen Bereich von Strömen, so dass die Spannungscharakteristika aufweisen einen vollen Sweep von dem Strom-Spannungsverhalten von der p-n Übergang Vorrichtung (110), wobei der volle Sweep umfasst die Off-Region, lineare Region und Sättigung Region von dem Strom-Spannungsverhalten;

einen Messung Schaltkreis, geeignet zum Messen der Spannungscharakteristika von der p-n Übergang Vorrichtung als eine Funktion von der Sequenz; und

einen Prozessor, geeignet zum Bestimmen des Minimum Wertes von dem Unter-Schwellenwert Swing von den Charakteristika und zum Konvertieren des Minimumwertes in einen Temperaturwert.

2. Der Temperatursensor (200) gemäß Anspruch 1, wobei

die Stromvorrichtung (120, 130), die p-n Übergang Vorrichtung (110), der Messung Schaltkreis und der Prozessor monolithisch integriert sind.

3. Der Temperatursensor (200) gemäß Anspruch 1 oder 2, wobei die Stromvorrichtung aufweist eine Mehrzahl von Stromquellen (130), wobei jede von den Stromquellen leitfähig gekoppelt ist an die p-n Übergang Vorrichtung (110) mittels eines jeweiligen Schalters (220), wobei der Temperatursensor ferner aufweist einen Controller, der geeignet ist, individuell die entsprechenden Schalter zu steuern, um die Sequenz bereitzustellen.

4. Der Temperatursensor (200) gemäß einem der Ansprüche 1 bis 3, wobei die p-n Übergang Vorrichtung (110) ein Transducer ist.

5. Der Temperatursensor (200) gemäß Anspruch 4, wobei der Transducer ein DTMOS (dynamic threshold metal oxid semiconductor) Transistor ist.

6. Der Temperatursensor (200) gemäß einem der Ansprüche 1 bis 5, ferner aufweisend eine Speichervorrichtung, geeignet zum Speichern eines gemessenen Spannungswertes für jeden von den Strömen in der Sequenz.

7. Eine elektronische Vorrichtung aufweisend den Temperatursensor (200) gemäß einem der Ansprüche 1 bis 6.

8. Die elektronische Vorrichtung gemäß Anspruch 7, wobei die elektronische Vorrichtung bereitstellt eine drahtlose Konnektivität und geeignet ist, die gemessene Temperatur an eine externe Vorrichtung drahtlos zu kommunizieren.

9. Ein Verfahren zum Messen einer Temperatur unter Verwendung einer p-n Übergang Vorrichtung (110), wobei das Verfahren aufweist:

Bereitstellen einer Sequenz von unterschiedlichen Strömen an die p-n Übergang Vorrichtung, wobei die Sequenz abdeckt einen Bereich von Strömen, so dass die Spannungscharakteristika aufweisen einen vollen sweep von dem Strom-Spannungsverhalten von der p-n Übergang Vorrichtung (110), wobei der volle sweep umfasst die Off-Region, lineare Region und Sättigung Region von dem Strom-Spannungsverhalten;
Messen der Spannungscharakteristika von der p-n Übergang Vorrichtung als eine Funktion von der Sequenz;
Bestimmen des Minimum Wertes von dem Unter-Schwellenwert Swing von den Charakteristika; und
Konvertieren den Minimum Wert in einen Temperatur Wert.

10. Das Verfahren gemäß Anspruch 9, wobei die Sequenz aufweist eine Sequenz von ansteigenden Stromwerten.

**Revendications**

1. Capteur de température (200), comprenant :

un dispositif à jonction p-n (110) ;
un dispositif de courant (120, 130) adapté à délivrer une séquence de courants différents au dispositif à jonction p-n, ladite séquence couvrant une plage de courants pour faire en sorte que les caractéristiques de tension englobent un balayage complet du comportement courant-tension du dispositif à jonction p-n (110), ledit balayage complet incorporant la région de blocage, la région linaire et la région de saturation du comportement courant-tension ;
un circuit de mesure adapté à mesurer les caractéristiques de tension du dispositif à jonction p-n en fonction de ladite séquence ; et
un processeur adapté à déterminer la valeur minimale de la pente sous le seuil à partir desdites caractéristiques et pour convertir ladite valeur minimale en une valeur de température.

2. Capteur de température (200) selon la revendication 1, dans lequel le dispositif de courant (120, 130), le dispositif à jonction p-n (110), le circuit de mesure et le processeur sont monolithiquement intégrés.

3. Capteur de température (200) selon la revendication 1 ou 2, dans lequel le dispositif de courant comprend une pluralité de sources de courant (130), chacune desdites sources de courant étant couplée conductivement au dispositif à jonction p-n (110) par le biais d'un commutateur respectif (220), le capteur de température comprenant en outre un module de commande adapté à commander individuellement lesdits commutateurs respectifs afin de délivrer ladite séquence.

**4.** Capteur de température (200) selon l'une quelconque des revendications 1 à 3, dans lequel le dispositif à jonction p-n (110) est un transducteur.

**5.** Capteur de température (200) selon la revendication 4, dans lequel le transducteur est un transistor DTMOS (métal oxyde semi-conducteur à seuil dynamique).

**6.** Capteur de température (200) selon l'une quelconque des revendications 1 à 5, comprenant en outre un dispositif de mémoire adapté à enregistrer une valeur de tension mesurée pour chacun des courants dans ladite séquence.

**7.** Dispositif électronique comprenant le capteur de température (200) selon l'une quelconque des revendications 1 à 6.

**8.** Dispositif électronique selon la revendication 7, lequel dispositif électronique offre une connectivité sans fil et est adapté à communiquer sans fil la température mesurée à un dispositif externe.

**9.** Procédé de mesure d'une température à l'aide d'un dispositif à jonction p-n (110), le procédé comprenant les étapes consistant à :

délivrer une séquence de courants différents au dispositif à jonction p-n, ladite séquence couvrant une plage de courants pour faire en sorte que les caractéristiques de tension englobent un balayage complet du comportement courant-tension du dispositif à jonction p-n (110), ledit balayage complet incorporant la région de blocage, la région linaire et la région de saturation du comportement courant-tension ;
mesurer les caractéristiques de tension du dispositif à jonction p-n en fonction de ladite séquence ;
déterminer la valeur minimale de la pente sous le seuil à partir desdites caractéristiques ; et
convertir ladite valeur minimale en une valeur de température.

**10.** Procédé selon la revendication 9, dans lequel ladite séquence comprend une séquence de valeurs de courant croissantes.

**FIG. 1**

**FIG. 2**

**FIG. 3**

**FIG. 4**

**FIG. 5**

**FIG. 6**

**FIG. 7**

120

$I_{sup}$

$I_2/I_1 = (I_{sup}(t2) - I_{sup}(t0))/ (I_{sup}(t1) - I_{sup}(t0))$

130

$I_1$    $I_2$    $I_3$    ...    $I_n$

(t1)    (t2)    (t3)    ...    (tn)

220

110

Transducer

$V_a(t1)$
$V_a(t2)$
...
$V_a(tn)$

200

## FIG. 8

$+I_n$
$+I_{n-1}$

$+I_4$
$+I_3$
$+I_2$
$I_1$

$V_1$ $V_2$ $V_3$ $V_4$   $V_{n-1}$ $V_n$

$T_n$

$T_{n-1}$

$T_4, T_3$   $T_2$

$t_1$ $t_2$ $t_3$ $t_4$   $t_{n-1}$ $t_n$

## FIG. 9

13

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5873053 A
- US 6489831 B
- US 7127368 B
- US 7197420 B
- US 7260007 B2

**Non-patent literature cited in the description**

- **G.C.M. MEIJER et al.** Temperature Sensors and Voltage References Implemented in CMOS Technology. *IEEE Sensors Journal,* 2001, vol. 1 (3), 225-234
- **S. CRISTOLOVEANU ; G. REICHERT.** Recent Advances in SOI Materials and Device Technologies for High Temperature. *IEEE conference proceedings of High-Temperature Electronic Materials, Devices and Sensors Conference,* 22 February 1998, 86-93
- **J.-K. LEE et al.** Temperature dependence of DTMOS transistor characteristics. *Solid State Electronics,* 2004, vol. 48, 183-187
- **A.J ANNEMA.** *IEEE Journal of Solid State Circuits,* July 1999, vol. 34 (7), 949-955
- **F. ASSADERAGHI et al.** *IEEE Transactions on Electronic Devices,* 1997, vol. 44 (3), 414-422
- **M. TERAUCHI.** *Japanese Journal of Applied Physics,* 2007, vol. 46 (7A), 4102-4104